# EUROPÄISCHE PATENTANMELDUNG

(11) **EP 4 137 321 A1**
(43) Veröffentlichungstag der Anmeldung: **22.02.2023**
(21) Anmeldenummer: 22191348.6
(22) Anmeldetag: 19.08.2022
(51) Int. Cl.: B32B 38/18, B32B 37/18, B32B 37/08, B32B 41/00

(54) **VORRICHTUNG UND VERFAHREN ZUR DISKONTINUIERLICHEN HERSTELLUNG EINES LAMINATS AUS MEHREREN SUBSTRATEN**

(30) Priorität: 19.08.2021 DE 102021004249
(71) Anmelder: Dieffenbacher Maschinenfabrik GmbH, 75059 Zaisenhausen (DE)
(72) Erfinder: HAGNER, Ralf, 75059 Zaisenhausen (DE); KROLL, Detlef, 75059 Zaisenhausen (DE)
(74) Vertreter: Hartdegen, Helmut

(57) **Zusammenfassung**

Die Erfindung betrifft eine Vorrichtung und ein Verfahren zur diskontinuierlichen Herstellung eines Laminats aus mehreren Substraten in einer Heißpresse, wobei die Vorrichtung umfasst: a) einen Bereitstellungsplatz (1) für ein Substratpaket (5) aus mehreren Substraten, b) eine Heißpresse (2), mit einer optionalen Kühlpresse (3), zur Verpressung eines Substratpakets (5) zwischen Pressplatten (14) mittels Druck und Wärme zu einem Laminat (6), c) einen Lagerplatz (4) für das Laminat (6) und d) eine diese verbindende Transfervorrichtung (10), wobei in der Transfervorrichtung (10) Manipuliereinheiten (9) für Laminate (6) angeordnet sind. Die Erfindung besteht darin, dass die Transfervorrichtung (10) geeignet ist das Laminat zumindest teilweise auf der unteren Pressplatte (14) gleitend aus der Heißpresse (2) oder aus der optionalen Kühlpresse (3) zu transportieren (1025).

## Beschreibung

Die Erfindung betrifft ein Vorrichtung zur diskontinuierlichen Herstellung eines Laminats aus mehreren Substraten nach dem Oberbegriff des Patentanspruches 1. Die Erfindung betrifft weiter ein Verfahren zur diskontinuierlichen Herstellung eines Laminats aus mehreren Substraten nach dem Oberbegriff des Patentanspruches 8.

Unter Laminaten versteht man üblicherweise einen Schichtaufbau aus gleichen oder diversen Substraten, welche nach einer Verpressung, bevorzugt unter Einfluss von Wärme, verklebt oder verschmolzen sind. Beispiele für Laminierungen sind in Kunststofftaschen gehülltes Papier, aber auch Trägerplatten, bevorzugt aus holzbasierten Materialien, auf denen eine oder mehrere Folien aufgeklebt werden um diese zu veredeln. Die Folien unterscheiden sich meist durch ihre Eigenschaften, beispielsweise wird eine Grundierfolie, eine Bild- bzw. Musterfolie, sowie eine durchsichtige Leimfolie aufgelegt, wobei durch den Druck- und Hitzeeintrag der Leim der Leimfolie die beiden anderen Folien durchdringt und nach seiner Aushärtung für den fertigen Verbund des Laminats sorgt. Somit versteht die Erfindung die Beschichtung von Kernplatten mit einer oder mehreren Folien oder ähnlich geeigneten Beschichtung als Herstellung eines Laminats.

Die Erfindung versteht bei der Herstellung von Laminaten aus mehreren Substraten Schichtstoffe, die im Stand der Technik als sogenannte dekorative Hochdruck-Schichtpressstoffplatten (HPL) bekannt geworden sind. Die englische Abkürzung HPL steht dabei für "high pressure laminates". Es handelt sich dabei im Wesentlichen um mehrschichtige ausgehärtete Werkstoffplatten (Laminate), die aus Schichten faseriger Zellulose (Substratpakete) bestehen, welche mit duroplastischen Harzen, insbesondere Phenolharz, imprägniert sind und ggfs. als Oberflächenbeschichtung ein mit Melaminharz getränktes Dekorpapier aufweisen. Die gegenüber dem aufwendigen Herstellungsprozess entstehenden Vorteile sind hohe Resistenzen gegenüber Umwelteinflüssen wie Hitze, Licht und Wasser respektive Feuchtigkeit. Dazu kommt eine gute Eigenstabilität sowie eine hohe Schlag- und Schnittfestigkeit gegenüber Werkzeugen. Diese Schichtstoffplatten werden bevorzugt als Fußböden, Möbelteile und vor allem als Küchenarbeitsplatten eingesetzt.

Bei der Herstellung kommen meist Taktpressen zum Einsatz, welche mit einem hohen Druck (mehr als 5 N/mm²) und einer hohen Temperatur (über 120° C) die Einzelschichten über eine Zeit (weniger als eine Minute bis hin zu mehreren Minuten) aushärten und zu einer Schichtstoffplatte laminieren. Für optimale Herstellungsergebnisse sollen die beheizten und verpreßten Schichten zügig abgekühlt werden um Eigenspannungen abzubauen und eine maschinelle Handhabung der an- oder ausgehärteten Schichtstoffplatten zu ermöglichen. Eine alternierende Aufheizung und Abkühlung der Pressplatten am Preßbär und Preßtisch haben sich als energetisch problematisch erwiesen und gehen in der Regel einher mit aufwendigen Konstruktionen um die Pressplatten dünn und hinsichtlich der alternierenden Temperaturen möglichst elastisch auszuführen, beispielsweise indem Fluidbohrungen für schnelles Aufheizen und Abkühlen in dünnen Pressplatten vorgesehen sind. Bei HPL-Anwendungen mit großen Drücken gestalten sich derartige Lösungen aber als nicht genügend steif, so dass diese trotz hohem Aufwand für temperaturelastische Preßplatten aufgrund ihrer Dicke eine hohe Wärmekapazität aufweisen und sich nicht kostengünstig oder schnell zwischen zwei Temperaturbereichen hin- und her bewegen lassen. Auch werden bei den bekannten Herstellungsverfahren aus Kosten- und Zeitgründen die verpreßten Laminate bei relativ hoher Temperatur nach nur einer kurzen Abkühlzeit aus der Presse ausgetragen. Meistens sind dann die Oberflächen der Laminate nicht ausreichend plastifiziert und es ergeben sich Eindrücke oder Verschiebungen an den Oberflächen durch den Transfer auf einen Liegeplatz oder in eine Kühlpresse.

Die Aufgabe der vorliegenden Erfindung besteht darin die oben genannten Nachteile zu vermeiden und eine Vorrichtung und ein Verfahren zur diskontinuierlichen Herstellung von Laminaten aus mehreren Substraten zu ermöglichen. Weiter soll sie die Oberflächenqualität der erstellten Laminate zu bewahren oder verbessern, bevorzugt in Verbindung mit geringeren Taktzyklen.

Die Vorrichtung zur diskontinuierlichen Herstellung eines Laminats aus mehreren Substraten in einer Heißpresse umfasst gattungsgemäß:
einen Bereitstellungsplatz für ein Substratpaket aus mehreren Substraten,
eine Heißpresse zur Verpressung eines Substratpakets zwischen Pressplatten mittels Druck und Wärme zu einem Laminat, optional eine Kühlpresse zur Kühlung des Laminats und
einen Lagerplatz für das Laminat, und
eine diese verbindende Transfervorrichtung, wobei in der Transfervorrichtung Manipuliereinheiten für Laminate angeordnet sind.

Die Aufgabe der Erfindung wird dadurch gelöst, dass die Transfervorrichtung geeignet ist das Laminat zumindest teilweise auf der unteren Pressplatte gleitend aus der Heißpresse zu transportieren.

Es hat sich überraschend gezeigt, dass durch die erfindungsgemäße Vorrichtung mit der erfindungsgemäßen Vorrichtung die drucklose Liegezeit nach der Durchheizung und Verpressung in der Heißpresse so minimiert werden kann, dass diese drucklose Liegezeit (Vor- und Aushärtezeit) keine technologischen Nachteile hinsichtlich der Produktqualität nach sich zieht. Die Presse kann nun nicht erst geöffnet werden, wenn die Oberflächen vollumfänglich ausgehärtet sind. Sondern mit der erfindungsgemäßen Vorrichtung ist es nun möglich die notwendige Krafteinleitung in das Laminat zum Anheben und Transportieren so weit zu minimieren, dass nur die Haftreibung überwunden werden muss und das Laminat schonend aus der Presse geschoben werden kann. Abdrücke auf den Oberflächen durch Greifer oder Vakuumsaugern können damit nicht mehr entstehen, weil die notwendigen Kräfte um ein vielfaches geringer sind.

In einer besonderes vorteilhaften Anwendung werden Laminate mit nur einen anspruchsvollen Oberflächenseite (oben) hergestellt, wobei hier die Taktzeiten sogar nochmal verringert werden können, wenn geringe Beeinträchtigungen auf der unteren Seite möglich sind.

Unter einem Schieber versteht die Erfindung ein flächiges Element, welches in Schieberichtung über eine Schmalseite (beispielsweise eine Stirnseite quer zur Transportrichtung oder eine Längsseite) Kräfte in das Laminat einleiten kann. Ein Trennblech wird von einer Schmalseite, ähnlich einem Kuchenheber zwischen das Laminat und die Pressplatte geschoben und kann zum einen als trennendes Maschinenelement fungieren und andererseits zur flächigen Einleitung von Kräften entgegen der Schwerkraft von der unteren Oberfläche aus in das Laminat dienen. In Vorteilhafter Weise kann ein Trennblech die Kräfte flächig in das Laminat einleiten und nicht eher punktuell wie eine Hebevorrichtung mit Saugern.

Die Erfindung versteht dabei unter einem Bereitstellungsplatz einen Bereich, in dem Substratpakete erstellt oder fertige Substratpakete gestapelt oder einzeln bevorratet werden. Eine Heißpresse ist eine beheizte Presse, die den notwendigen Ansprüchen an Temperatur und Druck, insbesondere hinsichtlich der Steifigkeit und Maßgenauigkeit, zur Herstellung von Laminaten genügt. Eine Kühlpresse kann dabei genauso anspruchsvoll wie die Heißpresse ausgelegt sein, wird aber aus Kostengründen in der Regel mit geringerer Steifigkeit und Maßhaltigkeit auskommen können, da Verzug durch hohe Temperaturen oder Druck nicht zu erwarten sind. Neben aktiven Kühlpressen mit einem Kühlkreislauf in den Pressplatten können auch passive Kühlpressen eingesetzt werden, die in der Lage sind die Laminate auch ohne aktive Kühlung während der Produktion ausreichend abzukühlen. Auf einem Lagerplatz können Stapel an fertigen respektive ausreichend abgekühlten Laminaten gebildet werden oder die Laminate werden zu einer eigenen Stapelvorrichtung oder beispielsweise einem Kühlsternwender abtransportiert. Die in Rede stehenden Manipuliereinheiten sind geeignet entweder die Substratpakete oder die Laminate entsprechend den Vorgaben aufzunehmen und ggfs. schonend zu transportieren. In Verbindung mit einem Transferwagen bilden diese in der Regel eine Transfervorrichtung, welche besonders bevorzugt auf Schienen bewegt werden. Eine zusätzliche Kühlpresse gegenüber dem Stand der Technik lässt sich ohne weiteres durch die Energieeinsparungen während des Betriebes amortisieren, insbesondere weil diese in der Regel geringeren Ansprüchen an Druck (nur Kontakt- respektive Zuhaltedruck) und Steifigkeit genügt. Ein rudimentäres Kühlsystem, wenn überhaupt, ist ebenfalls kostengünstig einzurichten. Ausdehnungen aufgrund von Temperaturunterschieden sind ebenfalls nicht vorhanden respektive soweit vernachlässigbar, was die Konstruktion und den Aufbau nochmals vereinfacht. Alternative maschinenbauliche Ausgestaltungen sind möglich.

Alternativ oder kumulativ können die Manipuliereinheiten (9) geeignet sein zur Minimierung der Haftreibung in die Laminate vertikale Kräfte einzuleiten und/oder die Laminate zumindest teilweise von der Pressplatte zu trennen.

Im Übrigen kann die Erfindung auf sinnvoll angewendet werden, wenn das Laminat aus einer Kühlpresse ausgeschoben werden soll.

Die Manipuliereinheiten für die Laminate können als Saugleiste, Sauger, Schieber und/oder Trennbleche ausgebildet sein.

Alternativ oder kumulativ ist vorgesehen, dass die Manipuliereinheiten an den Längsseiten und/oder Stirnseiten des Laminats angeordnet sein, wobei bevorzugt eine Saugleiste mit Saugern an der in Transportrichtung liegenden Stirnseite des Laminats und/oder ein Schieber an der entgegen der Transportrichtung liegenden Stirnseite des Laminats angeordnet sein kann.

Zusätzlich oder alternativ kann an der Manipuliereinheit ein verfahrbares und das Laminat teilweise untergreifendes Trennblech angeordnet sein, wobei bevorzugt das unterfahrende Trennblech in Wirkverbindung mit einem Schieber und/oder mit einer Saugleiste verwendet wird.

Alternativ oder kumulativ ist vorgesehen, dass zwischen der Heißpresse und dem Lagerplatz oder der Heißpresse und der Kühlpresse zumindest eine das Laminat während dem Transport stützende Vorrichtung, bevorzugt eine Gleitfläche, vorgesehen ist. Diese kann auch zwischen der Kühlpresse und dem Lagerplatz angeordnet sein. Die Gleitfläche kann in oder entgegen der Produktionsrichtung beweglich ausgeführt sein und zum Beispiel auch das noch heiße Laminat untergreifen, damit es durch die Schieber der Manipuliereinheiten respektive den Transferwagen aus der Heißpresse geschoben werden kann.

Bevorzugt wäre vorgesehen, dass die Gleitfläche aus einem reibungsmindernden Material oder Wälzlagern besteht.

Besonders vorteilhaft hat sich der Umstand gezeigt, wenn die Pressplatte der Kühlpresse zumindest während des Transports eines Laminats niedriger angeordnet ist als die Pressplatte der Heißpresse. Das gilt natürlich ebenfalls wenn keine Kühlpresse verwendet wird für den Lagerplatz respektive dessen Lagerfläche für das ankommende Laminat.

Alternativ oder kumulativ gegenüber den obigen Merkmalen kann eine Steuer- oder Regelungsvorrichtung angeordnet sein, bevorzugt wirkverbunden mit einer Sensorik in der Vorrichtung und/oder einer Datenbank mit einer vorgegebenen Wertetabelle, die geeignet ist die zu verwendenden Kräfte zur Minimierung der Haftreibung und/oder die Aktivitäten der Manipuliereinheiten und/oder der Transportvorrichtung zu steuern oder zu regeln.

Unter Sensorik sind Meßsysteme oder Rückmeldesignale der Vorrichtungsteile zu verstehen, die Kräfte, Bewegung, Lage, und dergleichen messen oder rückmelden. Hierbei können vorgegebene Grenzwerte aus einer Datenbank entnommen oder Erfahrungswerte verwendet werden, um die Vorrichtung derart effizient zu steuern, dass bei hoher Quantität eine hohe Qualität der Laminate erzeugt werden können.

Bevorzugt ist die Steuer- oder Regelungsvorrichtung geeignet, die auf das Substrat wirkenden Kräfte zum Transport bzw. zur Minimierung der Haftreibung derart zu steuern oder zu regeln, dass eine die Oberfläche des Laminats schädigend wirkende Kraft nicht überschritten wird. Dies gilt auch für einzutragende Biegemomente in das Laminat.

In einer besonderen Ausführungsform kann die Steuer- oder Regelungsvorrichtung geeignet sein, zur Minimierung der Haftreibung erst vertikale Kräfte und bereits vor dem Überwinden der Haftreibung des Laminats mit der Pressplatte horizontale Kräfte in das Laminat einzubringen. Hierzu kann es insbesondere vorgesehen sein, dass ein Computerprogrammprodukt in der Steuer- oder Regelungsvorrichtung umgesetzt wird, welches die ansteuerbaren Elemente der Vorrichtung im entsprechenden Kontext ansteuert bzw. betreibt.

Im Zusammenhang mit dem gleitenden Austrag aus der Presse aber auch als eigenständige Erfindung kann es angesehen werden, dass an den Manipuliereinheiten und/oder an den Transferwagen Mittel zur Positionierung des Substratpakets und/oder des Laminats längs und/oder quer zur Transportrichtung angeordnet sind, wobei bevorzugt diese Mittel geeignet sind die Positionierung während der Bewegung in Transportrichtung, während dem Ablegen und/oder danach durchzuführen. Hierzu kann die oben genannte Steuer- und Regelungsvorrichtung entsprechend verwendet werden, als auch ein optionales Computerprogrammprodukt. Dies ist insbesondere dann von Vorteil, wenn eine der beide Oberflächenseiten des Substratpaketes graphische Merkmale aufweisen, die mit Erhöhungen oder Vertiefungen der Heizplatte übereinstimmen, um nach dem Pressvorgang eine gewisse Haptik/Maserung auf der Flächenseite zu erzeugen.

Alternativ oder kumulativ kann es dabei vorgesehen sein, dass die Mittel zur Positionierung des Substratpaketes und/oder des Laminats eine Sensorik zur Überwachung und/oder Stellglieder zur Einstellung der Lage und/oder Position umfassen, wobei bevorzugt die Stellglieder mit den Manipuliereinheiten und/oder an den Substratpaketen und/oder an den Laminaten in Wirkverbindung stehen.

Alternativ oder kumulativ kann es vorgesehen sein, dass die Mittel zur Einstellung der Lage und/oder der Position des durch die Manipuliereinheiten gehaltene Substratpakets und/oder des Laminats Stellglieder aufweisen, die geeignet sind das Substratpaket und/oder das Laminat gegenüber den Manipuliereinheiten zu verschieben, bevorzugt durch eine Krafteinleitung in die Längsseite und höchst bevorzugt im Zuge des Transportes.

Dabei ist in einer besonders vorteilhaften Ausführungsform vorgesehen, dass ein Trennblech das Laminat oder das Substratpaket anhebt und eigenständig gegenüber dem Trennblech bzw. der Manipuliereinheit ein Schieber oder eine Klemmecke eine Neuorientierung bzw. Verschiebung initiiert. In Vorteilhafter Weise können diese relativ kleinen Verschiebemechanismen, welche besonders bevorzugt an den Schmalseiten angreifen, eine höhere Auflösung bei der Verschiebung bzw. Justierung der Ausrichtung bewirken, als die groben Manipuliereinheiten für den Transport.

Zur Absicherung und zum Schutz der Pressplatten kann es auch vorgesehen sein, dass an den Pressplatten und/oder der Presse Leiteinrichtungen für die beweglichen Manipuliereinheiten derart angebracht sind, dass die Krafteinleitung der Manipuliereinheiten auf die Pressenplatten im Zuge der Aufnahme eines Laminats reduziert wird oder Kollisionen vermieden werden. Damit kann übermäßiger Verschleiß vermieden und die Steuerungs- und Regelungstechnik entlastet werden.

Alternativ oder kumulativ kann es vorgesehen sein, dass die in Kontakt mit den Pressplatten tretenden Teile oder Bereiche der Manipuliereinheiten eine geringere Härte aufweisen als die Pressplatten. Damit wird erreicht, dass selbst bei einem tribologischen Kontakt zwischen den beiden Maschinenelementen weniger die Pressplatte als die Manipuliereinheit Verschleiß unterliegt. Schäden an Pressplatten mit Gravur oder an deren Relief können damit vermieden werden, da ein Teil einer Manipuliereinheit einfacher zu ersetzen ist, als die Gravur oder die Oberfläche einer Pressenplatte. Insbesondere wenn die Gravur der Oberfläche ihren optischen Niederschlag im Oberflächendekor des Laminats aufweist und für die entsprechende Haptik übereinstimmen soll.

Für eine optimale Auslastung der Vorrichtung kann es sinnvoll sein, wenn anstelle eines Substratpaketes und eines Laminates zumindest zwei oder mehr Substratpakete und somit zumindest zwei oder mehr Laminate in einem kleineren Format hintereinander respektive nebeneinander die Vorrichtung entsprechend durchlaufen. Die Manipuliereinheiten sind entsprechend auf diesen Vorgang anzupassen. Bevorzugt wird das Substrat (Substratpaket oder Laminat) quer zur Transportrichtung ein oder mehrmals unterbrochen.

Die Aufgabe wird für das Verfahren zur diskontinuierlichen Herstellung eines Laminats aus mehreren Substraten in einer Heißpresse gelöst durch die folgenden Verfahrensschritte:
- Bereitstellung eines Substratpakets aus mehreren Substraten an einem Bereitstellungsplatz,
- Verpressung eines Substratpakets zwischen Pressplatten in einer Heißpresse zu einem Laminat mittels Druck und Wärme,
- optional die Kühlung des Laminats in einer Kühlpresse und
- die Ablage des Laminats an einem Lagerplatz,
wobei eine Transfervorrichtung, die Substratpakete und die Laminate in Transportrichtung transportiert und wobei
das Laminat zumindest teilweise auf der unteren Pressplatte gleitend aus der Heißpresse oder aus der Kühlpresse transportiert wird.

Die nachstehenden Merkmale können das oben genannte Verfahren eigenständig oder in Kombination weiter verbessern, indem
- die Manipuliereinheiten zur Minimierung der Haftreibung von der Pressplatte in die Laminate eine Kraft entgegen der Schwerkraft einleiten und/oder die Laminat zumindest teilweise von der Pressplatte getrennt werden;
- als Manipuliereinheiten für die Laminate Saugleisten, Sauger, Schieber und/oder untergreifende Trennbleche verwendet werden;
- die Manipuliereinheiten im Wesentlichen längs und/oder stirnseitig des Laminats Kräfte einleiten, wobei bevorzugt eine Saugleiste mit Saugern und/oder ein Schieber kraft- und/oder formschlüssig mit den Laminat wirkverbunden wird;
- das Trennblech das Laminat zumindest teilweise unterfährt, wobei bevorzugt das unterfahrende Trennblech in Verbindung mit einem Schieber und/oder mit einer Saugleiste mit Saugern kraft- und/oder formschlüssig mit dem Laminat wirkverbunden wird;
- während des Transports aus der Heißpresse oder der Kühlpresse das Laminat mittels einer stützenden Vorrichtung, bevorzugt mittels einer Gleitfläche, gestützt wird;
- die Lagerfläche des Lagerplatzes und/oder die Pressplatte der Kühlpresse zumindest während des Transports des Laminats in seiner Höhe zumindest teilweise niedriger ist als die Pressplatte der Heißpresse oder der Kühlpresse;
- eine Steuer- oder Regelungsvorrichtung die zu verwendenden Kräfte zur Minimierung der Haftreibung und/oder die Aktivitäten der Manipuliereinheiten und/oder der Transportvorrichtung steuert oder regelt, wobei diese bevorzugt mit Sensorik in der Vorrichtung und/oder einer Datenbank wirkverbunden ist;
- die Steuer- oder Regelungsvorrichtung die auf das Substrat wirkenden Kräfte zum Transport bzw. zur Minimierung der Haftreibung derart steuert oder regelt, dass eine die Oberfläche des Laminats schädigend wirkende Kraft nicht überschritten wird;
- die Steuer- oder Regelungsvorrichtung zur Minimierung der Haftreibung erst vertikale Kräfte und bereits vor dem Überwinden der Haftreibung zwischen dem Laminat und der Pressplatte horizontale Kräfte in das Laminat einsteuert;
- über geeignete Mittel zur Positionierung des Substratpakets und/oder des Laminats an den Manipuliereinheiten und/oder an den Transferwagen das Laminat längs und/oder quer zur Transportrichtung positioniert wird, wobei die Positionierung während der Bewegung in Transportrichtung, während dem Ablegen und/oder danach durchgeführt wird;
- die Mittel zur Positionierung des Substratpaketes und/oder des Laminats eine Sensorik zur Überwachung und/oder Stellglieder zur Einstellung der Lage und/oder der Position umfassen, wobei bevorzugt die Stellglieder mit den Manipuliereinheiten und/oder an den Substratpaketen und/oder an den Laminaten in Wirkverbindung angeordnet sind;
- die Mittel zur Einstellung der Lage und/oder der Position des durch die Manipuliereinheiten gehaltene Substratpakets und/oder des Laminats Stellglieder verwenden, die geeignet sind das Substratpaket und/oder das Laminat gegenüber den Manipuliereinheiten zu verschieben, bevorzugt durch eine Krafteinleitung in die Längsseite und/oder eine der Stirnseiten;
- an den Pressplatten und/oder der Presse Leiteinrichtungen für die beweglichen Manipuliereinheiten verwendet werden, damit die Krafteinleitung der Manipuliereinheiten auf die Pressplatten im Zuge der Aufnahme eines Laminats reduziert wird oder Kollisionen vermieden werden; oder
- für die in Kontakt mit den Pressplatten tretenden Teile oder Bereiche der Manipuliereinheiten Maschinenelemente verwendet werden, die eine geringere Härte aufweisen als die Pressplatten.

Durch die Erfindung ist es nun möglich eine extrem schnelle und sichere Abfolge vorzusehen, um kurze Taktzeiten und damit möglichst hohe Kapazitäten zu erreichen.

Nachstehend sind wesentliche Merkmale, wie sie die Erfindung versteht, nochmals erläutert:
Ein Laminat ist ein Schichtkörper, bestehend aus einzelnen Schichten (Substraten), ggfs. zusammen mit einem dickeren Trägerkörper, welche mittels Druck und Wärme zusammengefügt werden. Vor der Laminierung werden also die einzelnen Schichten zu einem Substratpaket, ggfs. mit einem dickeren Trägerkörper, zusammengestellt und einer Presse zugeführt.

Eine Heißpresse oder eine Kühlpresse umfasst Mittel zur Aufbringung einer Flächenpressung auf die Flächenseiten des Substratpakets, in der Regel bis das Bindemittel an- oder ausgehärtet ist, welches die Schichten verbindet. In der Presse sind Mittel, beispielsweise hydraulische Druckzylinder, zur Bewegung der beheizten Pressenplatten angeordnet, damit das Substrat dazwischen verpresst werden kann. Die Pressenplatten sind vorzugsweise beheizt oder gekühlt und können reliefartig gemasert sein um eine Prägung auf der oder den Flächenseiten des Laminats einzubringen. Eine reine Kontaktnahme der Pressenplatten mit dem Laminat im Zuge der Kühlung ist ebenfalls denkbar.

Das Bindemittel selbst kann als eigene Schicht (Harzfolie) im Substratpaket vorliegen, einzelne Schichten können von sich aus adhäsiv gegenüber den benachbarten Schichten wirken oder die Schichten können mit einem Bindemittel beaufschlagt sein.

Die Vorrichtung zur diskontinuierlichen Herstellung eines Laminats könnte technisch auch als Anlage zur Herstellung definiert sein, da sie aus einzelnen verschiedenen Vorrichtungen besteht, die zur Durchführung des Herstellungsvorganges zusammenwirken.

Manipuliereinheiten können angetriebene mithin bewegliche Mittel sein, die in der Lage sind ein Substratpaket zu manipulieren, indem Sie es bevorzugt mit einer Kraft in und entgegen der Schwerkraft beaufschlagen, bevorzugt zumindest teilweise oder vollständig anheben und es über eine vorgegebene Wegstrecke transportieren. Die Hauptbewegung von einem Vorrichtungs- oder Anlagenteil z7um nächsten kann dabei von eigenen Vorrichtungen durchgeführt werden, beispielsweise von einem Transportwagen.

Elemente zur Handhabung der Substrate/Laminate können Saugleisten sein, aber auch Sauger, Saugbalken, klemmende Elemente oder Schieber. Die Elemente können dabei von einer oder beiden Flächenseiten, sowie von den Schmalseiten Kräfte in das Substratpaket oder das Laminat einleiten. Besonders bevorzugt kann ein Schieber vorgesehen sein, der über die Schmalseiten (Höhe/Dicke definierende Seiten) Kräfte einleiten kann.

Besonders bevorzugt ist vorgesehen, dass ein oder mehrere Stellglieder vorgesehen sind, die unabhängig von den Elementen zur Handhabung bzw. zum Transport die Lage und/oder Position des Substratpakets bzw. des Laminats beeinflussen können, höchst bevorzugt durch Einleitung von Kräften an den Schmalseiten. Die Schmalseiten sind die Seiten, welche gegenüber der Länge und Breite eines Substrates/Laminats das geringste Maß aufweist, somit die Höhe oder die Dicke des Substrates/Laminates definieren. Mit anderen Worten verbinden die, in der Regel vier, Schmalseiten die beiden Flächenseiten.

Weiterführende Manipulatoren, beispielsweise zum Transport eines Substratpakets zum Bereitstellungsplatz oder zum Transport eines Laminats vom Lagerplatz zur weiteren Verarbeitung können vorgesehen sein. Entsprechend alternativ können auf dem Bereitstellungsplatz Mittel vorgesehen sein, die dort erst das Substratpaket bilden, indem die einzelnen Schichten dort zusammengelegt werden und/oder kann auf dem Lagerplatz erst ein Stapel an Laminaten gebildet werden, der als Stapel abtransportiert wird.

Insbesondere ist es eine weiterführende Erfindung, wenn die Manipulationsvorrichtungen oder -einheiten wie oben beschrieben auch für die Substratpakete und deren Positionierung Anwendung finden können. Daneben ist es angemessen, auch die Positionier- bzw. Manipulationsvorrichtungen mit den Klemm- und Halteeigenschaften als den Stand der Technik erfinderisch weiterbildend anzusehen.

Besonders bevorzugt versteht die Erfindung unter einer anderen Art an Manipuliereinheiten Einrichtungen, die sich hinsichtlich Ihrer Greif- oder Haltemethodik unterscheiden. Beispielsweise sollten die Manipuliereinheiten für das Substratpaket geeignet sein, dieses aus einer Vielzahl an Schichten bestehende Paket so zu transportieren, dass sich die Schichten nicht verschieben oder das Paket per se geschädigt wird. Die Oberfläche ist dabei meist eher kein Problem während des Manipulierens, somit sind Greifer, Klemmeinrichtungen oder dergleichen durchaus geeignet.

Im Gegensatz dazu sind frisch verpreßte Laminate an ihrer Oberfläche empfindlich bzw. noch weich und zu starke Eingriffe durch Manipuliereinheiten könnten darauf Spuren hinterlassen. Also sollten die Manipuliereinheiten der zweiten Art für die Laminate entsprechend anders ausgestaltet sein, dass diese, insbesondere schonender, die Oberflächen mittels möglichst flächiger Unterdrucksaugern anheben. Ganz besonders bevorzugt wird auf ein großflächiges Anheben verzichtet bzw. wird nur so viel Kraft vertikal eingeleitet, damit eine Schiebevorrichtung das Laminat oberflächenschonend (auf der Liegeseite) verschieben kann. Ganz besonders bevorzugt wird das Laminat auch durch die ggfs. vorhandenen Unterdrucksaugleisten horizontal verschoben bzw. werden Kräfte zusätzlich eingeleitet um auch wiederum auf den Längsseiten Stauchungen zu vermeiden. Somit ist es im Sinne der Erfindung, dass entweder nur geschoben wird, indem ein Schieber verwendet wird oder eine Unterdruckleiste mit oder ohne vertikaler Krafteinleitung ebenfalls das Laminat schiebt, eine Kombination aus beidem und/oder dass bis zur einer zulässigen Grenze Kraft vertikal zur Verminderung der Haftreibung bzw. der liegenden Masse, eingeleitet wird und ggfs. parallel oder anschließend eine schiebende Kraft eingeleitet wird. Hierzu kann es insbesondere möglich sein, dass die Krafteinleitung in die Laminate steuerbare oder regelbar ist, um beispielsweise auf unterschiedliche Laminate und deren Härtegrade reagieren zu können, bevorzugt automatisiert.

Hinsichtlich einer Gleitfläche sei ausgeführt, dass diese bevorzugt ein das Substrat bzw. das Laminat stützende Fläche darstellt, welche ein Durchhängen/-biegen des Substrats auf dem Weg verhindert. Dabei kann diese Fläche als Rolle, Tisch, Balken oder dergleichen ausgebildet sein und wird adaptiv oder stationär während des Transportes wirken. Dabei kann vorgesehen sein, dass bei einer quasi stationären Anordnung das Laminat über die stützende Fläche geschoben oder gezogen wird. Bei längeren Transportwegen kann die stützende Fläche eine unterstützende Bewegung ausführen und/oder aus mehreren beabstandeten Gleitflächen bestehen. Die Gleitfläche kann auch geeignet sein als eine Art Übergabetisch zu wirken, das Laminat unterfahren, aufnehmen und transportieren.

Weitere vorteilhafte Maßnahmen und Ausgestaltungen des Gegenstandes der Erfindung gehen aus den Unteransprüchen und der folgenden Beschreibung mit der Zeichnung hervor.

Es zeigen:
- Figur 1: in einer schematischen Draufsicht die Vorrichtung in einer ersten Betriebsposition:
- Figur 2: die Vorrichtung nach Figur 2 in einer zweiten Betriebsposition;
- Figur 3: eine Ansicht quer zur Transportrichtung während des Transports nach einem ersten Ausführungsbeispiel der Vorrichtung;
- Figur 4: eine Draufsicht auf ein Laminat während des Transports nach einem weiteren Ausführungsbeispiel der Vorrichtung;
- Figur 5: eine Draufsicht auf ein Laminat während des Transports nach einem weiteren Ausführungsbeispiel der Vorrichtung;
- Figur 6: eine Ansicht in Transportrichtung während des Transports nach einem weiteren Ausführungsbeispiel der Vorrichtung;
- Figur 7: eine Ansicht quer zur Transportrichtung während des Transports nach einem weiteren Ausführungsbeispiel der Vorrichtung und
- Figur 8: eine schematische Darstellung der Steuer- und Regelungsvorrichtungen mit beispielhaften Wirkverbindungen.

Es sei vorausgeschickt, dass die Zeichnung ein gesamt optimiertes Ausführungsbeispiel zeigt, in dem viele einzelne und voneinander unabhängig kombinierbare Merkmale der Erfindung zur Taktzeitoptimierung eingesetzt und kombiniert werden.

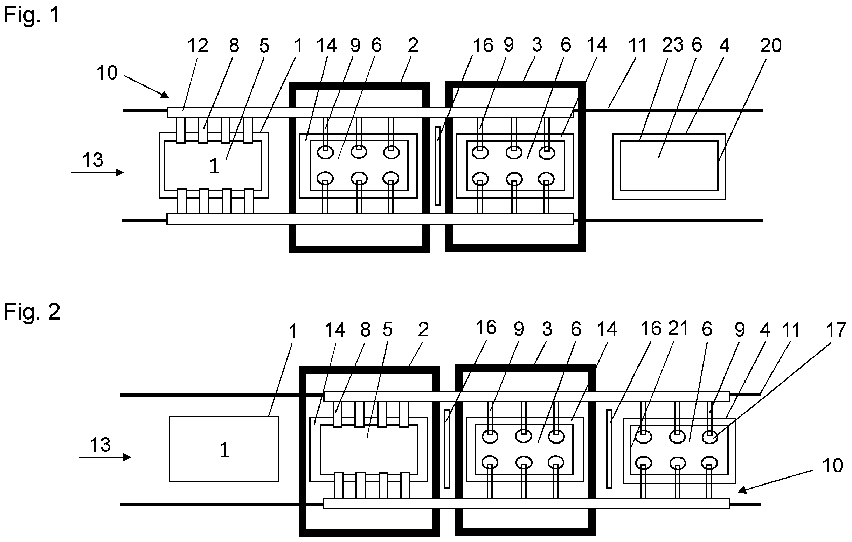

Figur 1 zeigt dabei die Vorrichtung mit einem Bereitstellungsplatz 1, einer Heißpresse 2, einer Kühlpresse 3 und einem Legeplatz 4 und eine diese Bereiche verbindende Transfervorrichtung 10. Diese Transfervorrichtung kann in einer einfachen Ausführungsform nur aus Manipuliereinheiten 8 für den Transport der Substratpakete 5 vom Bereitstellungsplatz 1 in die Heißpresse 2 und aus Manipuliereinheiten 9 für den Transport der aus den Substratpaketen 5 hergestellten Laminate 6 von der Heißpresse 2 in die Kühlpresse 3 respektive von der Kühlpresse 3 auf den Lagerplatz 4 bestehen. In vorteilhafter Weise können die Manipuliereinheiten 8 und 9 auf Schienen 11 angeordnet sein und darauf bewegt werden. Höchst vorteilhaft sind zwischen den Manipuliereinheiten 8, 9 und den Schienen 11 Transferwagen 12 angeordnet. Diese Transferwagen können jeweils für einen Set Manipuliereinheiten 8, 9 angeordnet sein. Alternativ können diese miteinander mechanisch oder elektronisch (Steuerungstechnik) verbunden sein. Höchstalternativ, wie in der Zeichnung dargestellt, ist nur ein Transferwagen 12 angeordnet, der die Manipuliereinheiten 8 und 9 für die Substratpakete 5 und die Laminate 6 in und entgegen der Transportrichtung 13 für die Laminate 6 respektive die Substratpakete 5 bewegt.

Die Transportrichtung 13 zeigt die grundsätzliche Transport- bzw. Produktionsrichtung an, entlang welcher die Substratpakete 5 zu Laminaten 6 verpreßt und die Laminate 6 gekühlt und auf dem Lagerplatz gestapelt bzw. bereitgestellt werden. Wie oben beschrieben kann je nach Anwendungsfall auch auf eine eigene Kühlvorrichtung oder Kühlpresse 2 verzichtet werden. Nach Figur 2 ist der Transferwagen 12 der Transfervorrichtung 10 in Transportrichtung 13 verfahren worden und hat entsprechend das Substratpaket 5 und die Laminate 6 nach rechts transportiert. Entgegen der Transportrichtung 13 verfährt der Transferwagen ohne aufgenommenes Substratpaket 5 oder Laminat 6.

In optimaler Weise werden die Bereiche, an denen die Substratpakete respektive Laminate zu liegen kommen, beispielsweise die Pressplatten 14 in der Heißpresse 2 oder der Kühlpresse 3, im Wesentlichen in einem ähnlichen oder sogar gleichen Abstand zueinander angeordnet sein, um die gleichzeitige Abgabe oder Aufnahme der Substratpakete 5 oder Laminate 6 zu gewährleisten.

Der verfahrenstechnische Ablauf bei der Herstellung von Laminaten (Schichtwerkstoffen) wäre dabei wie folgt:
Auf dem Bereitstellungsplatz 1 werden die Laminate nacheinander zu einem Substratpaket geschichtet oder ein Substratpaket 5 wird dort bereitgestellt. Wie in Figur 1 zu sehen ist, steht der Transferwagen 12 der Transfervorrichtung 10 links bereit und reicht bis zur Kühlpresse 3. Wenn die Produktion bereits fortgeschritten ist, liegt zu diesem Zeitpunkt nach dem Pressvorgang in der Heißpresse 2 ein heißes Laminat 6 bereit und gleichzeitig liegt in der Kühlpresse 3 ein gekühltes Laminat 6. Die Manipuliereinheiten 8, 9 der Transfervorrichtung nehmen, bevorzugt gleichzeitig das Substratpaket 5 am Bereitstellungsplatz 1, das Laminat 6 in der Heißpresse 2 und das Laminat 6 in der Kühlpresse 3 auf.

Nach dem Aufnahmevorgang verfährt der Transferwagen 12 entlang der Transportrichtung 13 nach rechts, vgl. Figur 2, und kann das neue Substratpaket 5 in die Heißpresse 2, das heiße Laminat 6 in die Kühlpresse 3 und das gekühlte Laminat 6 auf die Lagerfläche am Lagerplatz 4 ablegen. Während die Heißpresse 2 und die Kühlpresse 3 schließen verfährt der Transferwagen 12 der Transfervorrichtung 10 "leer" entgegen der Transportrichtung 13 zurück. Somit steht der Transferwagen 12 wieder in Position wie im oberen Teil der Zeichnung und kann nach Bereitstellung eines neuen Substratpakets 5 und Öffnen der Heiß- und Kühpressen 2, 3 dieses und die Laminate 6 aufnehmen, um alle wiederum entlang der Transportrichtung 13 zu transportieren.

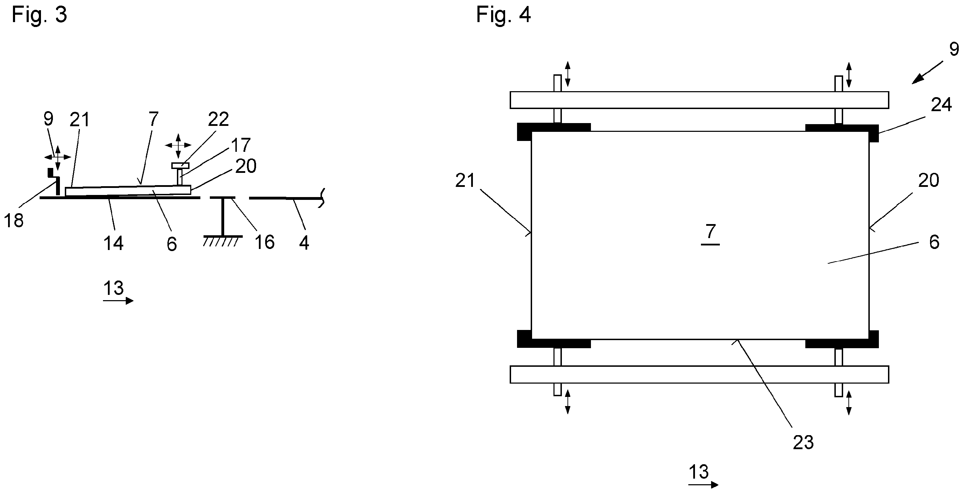

Figur 3 zeigt beispielhafte Manipuliereinheiten 9, welche horizontal wie vertikal bewegbar oberhalb einer Pressplatte 14 ausgeführt sind. Auf der linken Seite des verpressten Substrats 6, an der Stirnseite 21, findet sich ein Schieber 18, der dazu geeignet ist das Laminat 6 in Transportrichtung 13 zu verschieben. Alternativ kann an dem Schieber 18 oder unabhängig von diesem ein Trennblech 19 (nicht dargestellt) angeordnet sein, welches das Laminat 6 unterfährt. Auf der rechten Seite, der Stirnseite 20, befindet sich eine Saugleiste 22 mit Saugern 17 bereits im Kontakt mit dem Laminat 6 und ist in der Lage Kräfte entgegen der Schwerkraft in das Laminat 6 zur Minimierung der Haftreibung einzuleiten. Dabei wird das Laminat an der Stirnseite 20 wie dargestellt leicht angehoben oder es ist ausreichend durch die Krafteinleitung in die Oberfläche 7 die Haftreibung des Laminats 6 gegenüber der Pressplatte 14 zu minimieren, damit der Schieber 18 in Transportrichtung 13 beginnen kann, das Laminat zu verschieben. Ab diesem Zeitpunkt kann auch die Saugleiste 22 beginnen in Transportrichtung 13 Kräfte in das Laminat einzuleiten. Für weitere Wege oder auch grundsätzlich kann zur Überbrückung bis zur nächsten Pressplatte 14 einer Kühlpresse 3 (nicht dargestellt) oder zum Lagerplatz 4 kann eine Gleitfläche 16 angeordnet sein. Die Gleitfläche 16 kann dabei auch zum Beispiel als ein Rollentisch oder ein endlos umlaufendes Band ausgeführt sein.

Mit Figur 4 ist eine alternatives Ausführungsbeispiel vorgesehen, welches an oder als Manipuliereinheit 9 verfahrbare Klemmecken 24 aufweist. Die Besonderheit dieser Klemmecken besteht darin, dass diese wie ein Schieber 18 an die Längsseiten 23 angedrückt werden, um Kräfte entgegen der Schwerkraft in das Laminat 6 einzuleiten. Ab einem vorgegebenen Zeitpunkt wird die Manimpuliereinheit 9 in Transportrichtung 13 verschoben. Um die Taktzeit zu verbessern sind die Klemmecken 24 derart ausgeführt, dass sie neben der Längsseite 23 auch die Kante zu einer Stirnseite 20, 21 umgreifen und damit als Widerlager für die entstehenden Trägheitskräfte des Laminats 6 wirken, wenn die Manipuliereinheit 9 beschleunigt und wieder abbremst.

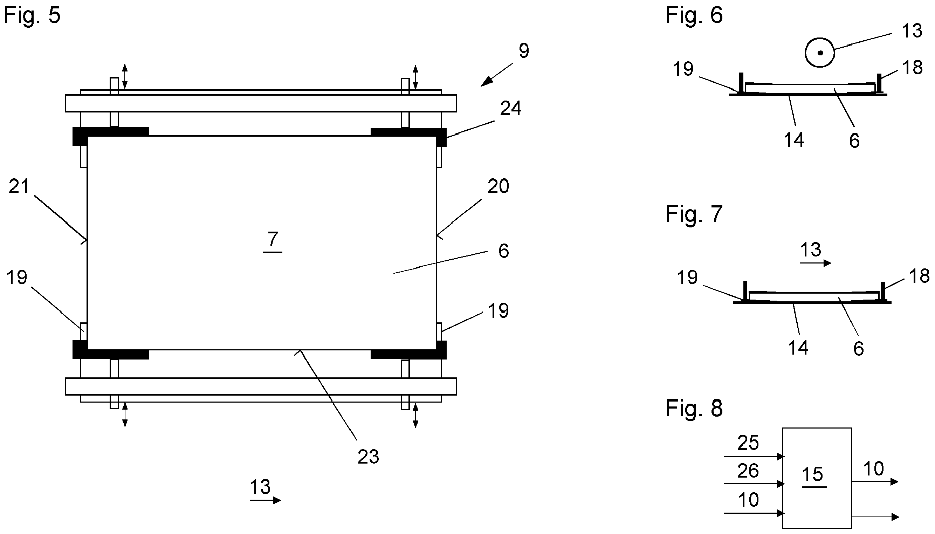

Nach Figur 5 und einem weiteren Ausführungsbeispiel kann das Laminat auch teilweise mit einem Trennblech 19, hier auf beiden Längsseiten 23 des Laminats 6, teilweise unterfahren werden. Bereits das Unterfahren kann ausreichen die Haftreibung zu minimieren wobei eine Krafteinleitung entgegen der Schwerkraft zusätzlich hilfreich sein wird. Alternativ oder kumulativ können hierbei wieder Schieber 18 oder Klemmecken 24 angeordnet sein. Insbesondere um das Laminat während des Transports, nach dem Transport oder während dem Ablegen wie vorgegeben neu zu positionieren können derartige Schieber 18 oder Klemmecken 24 benutzt werden. Alternativ sind auch nochmalige weitere andere Stellglieder vorsehbar.

Figur 6 zeigt in einem weiteren Ausführungsbeispiel, ähnlich wie Figur 5, dass an den Längsseiten 23 des Laminats Schieber 18 und/oder Trennbleche 19 Anwendung finden können.

Figur 7 zeigt eine ähnliche Anwendung in einem weiteren Ausführungsbeispiel, nur mit dem Unterschied, dass die Schieber 18 und/oder die Trennbleche 19 an den Stirnseiten 20, 21 des Laminats 6 angeordnet sind, um die Aufgabe des Transports zu erfüllen.

Natürlich wäre auch eine Kombination aus den technischen Eigenschaften der Figuren 6 und 7 denkbar.

Figur 8 stellt schematisch eine Steuer- und Regelungsvorrichtung 15 dar, welche die Transfervorrichtung 10, aber je nach Aufbau auch die einzelnen anderen notwendigen Stellglieder ansteuert. Dabei ist vorgesehen, dass die Steuer- und Regelungsvorrichtung ein Computerprogrammprodukt verwenden kann. Alternativ oder kumulativ kann die Steuer- und Regelungsvorrichtung 15 auch auf eine Datenbank 25 und/oder Sensorik 26 der Vorrichtung zurückgreifen, um die Vorrichtung zu steuern oder zu regeln. Als Eingangssignal ist auch die Transfervorrichtung 10 dargestellt, welche über entsprechende Sensorik Rückmeldungen, Statusmeldungen oder dergleichen an die Steuer- und Regelungsvorrichtung 15 geben kann.

Die obigen Merkmale sind alle eigenständig zu verwenden, können aber auch in ihrer beliebigen Kombination vorteilhafte Auswirkungen auf den Transfer von Laminaten innerhalb einer derartigen Vorrichtung 1025 aufweisen und verwirklicht werden.

### Bezugszeichenliste 1025:

1. Bereitstellungsplatz
2. Heißpresse
3. Kühlpresse
4. Lagerplatz
5. Substratpaket
6. Laminat
7. Oberfläche
8. Manipuliereinheit
9. Manipuliereinheit
10. Transfervorrichtung
11. Schienen
12. Transferwagen
13. Transportrichtung
14. Pressplatte
15. Steuer- oder Regelungsvorrichtung
16. Gleitfläche
17. Sauger
18. Schieber
19. Trennblech
20. Stirnseite
21. Stirnseite
22. Saugleiste
23. Längsseite
24. Klemmecke
25. Datenbank
26. Sensorik

## Patentansprüche

1. Vorrichtung zur diskontinuierlichen Herstellung eines Laminats aus mehreren Substraten in einer Heißpresse umfassend:
- einen Bereitstellungsplatz (1) für ein Substratpaket (5) aus mehreren Substraten,
- eine Heißpresse (2), mit einer optionalen Kühlpresse (3), zur Verpressung eines Substratpakets (5) zwischen Pressplatten (14) mittels Druck und Wärme zu einem Laminat (6),
- einen Lagerplatz (4) für das Laminat (6),
- eine diese verbindende Transfervorrichtung (10), wobei in der Transfervorrichtung (10) Manipuliereinheiten (9) für Laminate (6) angeordnet sind,
**dadurch gekennzeichnet, dass** die Transfervorrichtung (10) geeignet ist das Laminat zumindest teilweise auf der unteren Pressplatte (14) gleitend aus der Heißpresse (2) oder aus der optionalen Kühlpresse (3) zu transportieren.

2. Vorrichtung nach Anspruch 1, **dadurch gekennzeichnet, dass** die Manipuliereinheiten (9) geeignet sind zur Minimierung der Haftreibung in die Laminate (6) vertikale Kräfte einzuleiten und/oder die Laminate (6) zumindest teilweise von der Pressplatte (14) zu trennen.

3. Vorrichtung zumindest nach einem der vorhergehenden Ansprüche, **dadurch gekennzeichnet, dass** an den Manipuliereinheiten (9) für die Laminate (6) Saugleisten (22), Sauger (17), Schieber (18) und/oder Trennbleche (19) angeordnet sind, welche bevorzugt an den Stirnseiten (20, 21) und/oder an den Längsseiten (23) angeordnet sind.

4. Vorrichtung zumindest nach einem der vorhergehenden Ansprüche, **dadurch gekennzeichnet, dass** an der Manipuliereinheit (9) ein das Laminat (6) teilweise untergreifendes Trennblech (19) angeordnet ist, wobei bevorzugt das unterfahrende Trennblech (19) in Wirkverbindung mit einem Schieber (18) und/oder mit einer Saugleiste (12) angeordnet ist.

5. Vorrichtung zumindest nach einem der vorhergehenden Ansprüche, **dadurch gekennzeichnet, dass** zwischen der Heißpresse (2), der Kühlpresse (3) und/oder dem Lagerplatz (4) zumindest eine das Laminat (6) während dem Transport stützende Vorrichtung, bevorzugt eine Gleitfläche (16), angeordnet ist.

6. Vorrichtung zumindest nach einem der vorhergehenden Ansprüche, **dadurch gekennzeichnet, dass** an den Manipuliereinheiten (8, 9) und/oder an den Transferwagen (12) Mittel zur Positionierung des Substratpakets (5) und/oder des Laminats (6) längs und/oder quer zur Transportrichtung (13) angeordnet sind, wobei bevorzugt diese Mittel geeignet sind die Positionierung während der Bewegung in Transportrichtung (13), während dem Ablegen und/oder danach durchzuführen.

7. Vorrichtung zumindest nach einem der vorhergehenden Ansprüche, **dadurch gekennzeichnet, dass** die Mittel zur Positionierung des Substratpaketes und/oder des Laminats eine Sensorik (26) zur Überwachung und/oder Stellglieder zur Einstellung der Lage und/oder Position umfassen, wobei bevorzugt die Stellglieder mit den Manipuliereinheiten (8, 9) und/oder an den Substratpaketen (5) und/oder an den Laminaten (6) in Wirkverbindung angeordnet sind.

8. Verfahren zur diskontinuierlichen Herstellung eines Laminats aus mehreren Substraten in einer Heißpresse umfassend die folgenden Verfahrensschritte:
- die Bereitstellung eines Substratpakets (5) aus mehreren Substraten an einem Bereitstellungsplatz (1),
- die Verpressung eines Substratpakets (5) zwischen Pressplatten (14) in einer Heißpresse (2) zu einem Laminat (6) mittels Druck und Wärme,
- optional die Kühlung des Laminats (6) in einer Kühlpresse (3) und
- die Ablage des Laminats (6) an einem Lagerplatz (4) und wobei eine Transfervorrichtung (10), die Substratpakete (5) und die Laminate (6) in Transportrichtung (13) transportiert,
**dadurch gekennzeichnet, dass** das Laminat (6) zumindest teilweise auf der unteren Pressplatte (14) gleitend aus der Heißpresse (2) oder aus der Kühlpresse (3) transportiert wird.

9. Verfahren zumindest nach einem der vorhergehenden Verfahrensansprüche, **dadurch gekennzeichnet, dass** die Manipuliereinheiten (9) zur Minimierung der Haftreibung von der Pressplatte (14) in die Laminate (6) eine Kraft entgegen der Schwerkraft einleitet und/oder die Laminat (6) zumindest teilweise von der Pressplatte (14) trennt.

10. Verfahren zumindest nach einem der vorhergehenden Verfahrensansprüche, **dadurch gekennzeichnet, dass** als Manipuliereinheiten (9) für die Laminate (6) Saugleisten (22), Sauger (17), Schieber (18) und/oder untergreifende Trennbleche (19) verwendet werden.

11. Verfahren zum indest nach einem der vorhergehenden Verfahrensansprüche, **dadurch gekennzeichnet, dass** die Manipuliereinheiten (9) im Wesentlichen längs und/oder stirnseitig des Laminats (6) Kräfte einleiten, wobei bevorzugt eine Saugleiste (22) mit Saugern (17) und/oder ein Schieber (18) kraft- und/oder formschlüssig mit den Laminat (6) wirkverbunden wird.

12. Verfahren zumindest nach einem der vorhergehenden Verfahrensansprüche, **dadurch gekennzeichnet, dass** das Trennblech (19) das Laminat (6) zumindest teilweise unterfährt, wobei bevorzugt das unterfahrende Trennblech (19) in Verbindung mit einem Schieber (18) und/oder mit einer Saugleiste (22) mit Saugern (17) kraft- und/oder formschlüssig mit dem Laminat (6) wirkverbunden wird.

13. Verfahren zumindest nach einem der vorhergehenden Verfahrensansprüche, **dadurch gekennzeichnet, dass** während des Transports aus der Heißpresse (2) oder der Kühlpresse (3) das Laminat (6) mittels einer stützenden Vorrichtung, bevorzugt mittels einer Gleitfläche (16), gestützt wird.

14. Verfahren zumindest nach einem der vorhergehenden Verfahrensansprüche, **dadurch gekennzeichnet, dass** eine Steuer- oder Regelungsvorrichtung (15) die zu verwendenden Kräfte zur Minimierung der Haftreibung und/oder die Aktivitäten der Manipuliereinheiten (9) und/oder der Transportvorrichtung (10) steuert oder regelt, wobei diese bevorzugt mit Sensorik (26) in der Vorrichtung und/oder einer Datenbank (25) wirkverbunden ist.

15. Verfahren zumindest nach einem der vorhergehenden Verfahrensansprüche, **dadurch gekennzeichnet, dass** über geeignete Mittel zur Positionierung des Substratpakets (5) und/oder des Laminats (6) an den Manipuliereinheiten (8, 9) und/oder an den Transferwagen (12) das Laminat (6) längs und/oder quer zur Transportrichtung (13) positioniert wird, wobei die Positionierung während der Bewegung in Transportrichtung (13), während dem Ablegen und/oder danach durchgeführt wird.

16. Verfahren zumindest nach einem der vorhergehenden Verfahrensansprüche, **dadurch gekennzeichnet, dass** die Mittel zur Positionierung des Substratpaketes und/oder des Laminats eine Sensorik (26) zur Überwachung und/oder Stellglieder zur Einstellung der Lage und/oder der Position umfassen, wobei bevorzugt die Stellglieder mit den Manipuliereinheiten (8, 9) und/oder an den Substratpaketen (5) und/oder an den Laminaten (6) in Wirkverbindung angeordnet sind.

17. Verfahren zumindest nach einem der vorhergehenden Verfahrensansprüche, **dadurch gekennzeichnet, dass** die Mittel zur Einstellung der Lage und/oder der Position des durch die Manipuliereinheiten (8, 9) gehaltene Substratpakets (5) und/oder des Laminats (6) Stellglieder verwenden, die geeignet sind das Substratpaket (5) und/oder das Laminat (6) gegenüber den Manipuliereinheiten (8, 9) zu verschieben, bevorzugt durch eine Krafteinleitung in die Längsseite (23) und/oder eine der Stirnseiten (20, 21).
